# FASCICULE DE BREVET EUROPEEN

(11) **EP 2 675 328 B1**
(45) Date de publication et mention de la délivrance du brevet: **10.02.2016**
(21) Numéro de dépôt: 12709943.0
(22) Date de dépôt: 20.02.2012
(51) Int. Cl.: A47J 36/02, B05D 5/08

(54) **ARTICLE CHAUFFANT COMPRENANT UN REVÊTEMENT ANTIADHÉSIF AVEC UN DÉCOR À TROIS DIMENSIONS**
ERWÄRMUNGSHILFSVORRICHTUNG MIT EINER ANTIHAFTBESCHICHTUNG MIT EINEM DREIDIMENSIONALEN MUSTER
HEATING UTENSIL COMPRISING A NON-STICK COATING WITH A THREE-DIMENSIONAL PATTERN

(30) Priorité: 18.02.2011 FR 1151375
(43) Date de publication de la demande: 25.12.2013
(73) Titulaire: SEB S.A., 69130 Ecully (FR)
(72) Inventeur: PERILLON, Jean-Luc, F-26130 Saint Paul Trois Chateaux (FR); FONTAINE, Michel, F-74150 Sales (FR); BALDECK, Clotilde, F-73490 La Ravoire (FR)
(74) Mandataire: Novagraaf Technologies
(86) Numéro de dépôt international: PCT/FR2012/050362
(87) Numéro de publication internationale: WO 2012/110752

(56) Documents cités:
- WO-A1-2011/086276
- US-A- 6 114 028

## Description

La présente invention concerne un article chauffant comportant une surface recouverte par un revêtement antiadhésif comprenant un décor à trois dimensions, et un procédé de fabrication d'un tel article chauffant.

L'invention vise plus particulièrement les articles culinaires chauffants tels que les poêles, les casseroles, ou les sauteuses, par exemple.

L'invention trouve également d'autres applications dans le domaine des grilles de plancha, des soles de four, des semelles de fers à repasser, de l'équipement de cuisson électrique (crêpières, grills de table, raclette, par exemple).

Les articles culinaires chauffants comprennent généralement un support destiné à être chauffé. Ce support comprend une surface intérieure recouverte par un revêtement antiadhésif, qui peut typiquement être un revêtement comprenant au moins une couche frittée à base de résine fluorocarbonée formant un réseau continu

La cuisson d'aliments à l'intérieur d'articles culinaires revêtus d'une telle couche de revêtement antiadhésif apporte de nombreux avantages comme la réduction de la quantité de graisses utilisées, et un nettoyage plus facile, impliquant une économie de temps et de produits tensio-actifs utilisés pour nettoyer la surface de l'article culinaire.

Pour former un décor sur les surfaces intérieures de ces articles culinaires comprenant un tel revêtement antiadhésif (c'est-à-dire à base de résine fluorocarbonée frittée formant un réseau continu), il est connu de l'homme de l'art de soit déposer le décor à la surface du revêtement antiadhésif, soit de le déposer entre les couches qui le constituent. Un tel décor est généralement coloré (avec une ou plusieurs couleurs) et comporte des motifs qui peuvent être continus ou discontinus.

Pour obtenir un décor à trois dimensions, on connaît le brevet français FR 1440147 de TEFAL, qui porte sur un procédé de décoration à trois dimensions (3D) à l'intérieur d'un matériau plastique translucide. Plus particulièrement, ce document décrit une méthode permettant d'obtenir un décor de manière industrielle en incorporant des charges ferromagnétiques lamellaires dans le matériau plastique translucide. Ces charges ferromagnétiques lamellaires sont soumises à un champ de contraintes magnétique fixe de façon à former un décor 3D.

On connaît également les demandes internationales WO°2006/066027, et WO 00/12622 déposées par Dupont de Nemours qui décrivent l'utilisation de particules métalliques (en particulier en acier inoxydable) dans les couches de primaire («*primer*») ou intermédiaire («*midcoat*») recouvrant un article. Les particules métalliques influent sur la conductivité thermique dans l'article en fonction de leur orientation. Cependant, les décors décrits dans les demandes WO°2006/066027, et WO 00/12622 ne permettent pas d'obtenir un effet de relief suffisant car la répartition des particules magnétisables est uniforme. De plus, le décor obtenu est monochrome, ce qui nuit à des possibilités de différentiation attendues pour un décor.

Par ailleurs, la demande internationale WO 99/12662 de Dupont de Nemours décrit un procédé permettant d'obtenir un décor à trois dimensions sur un article culinaire dans lequel la couche intermédiaire en polytétrafluoroéthylène (PTFE) intègre des particules métalliques. Ces décors peuvent être constitués d'un ou plusieurs motifs, et sont obtenus au moyen d'un seul aimant ou électro-aimant. Néanmoins, de telles couches de PTFE comprenant des particules métalliques orientées par un champ magnétique de façon à former un décor à trois dimensions présentent des propriétés d'antiadhérence diminuées par rapport aux mêmes couches de PTFE sans particules métalliques.

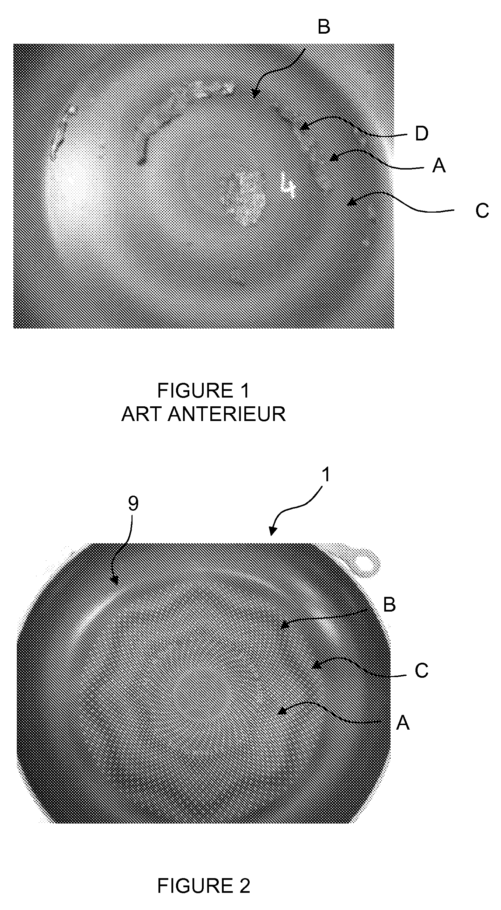

Plus particulièrement, les articles culinaires recouverts d'une telle couche présentent une surface antiadhésive ayant des propriétés antiadhésives non homogènes, avec des zones A dans lesquelles les propriétés antiadhésives sont bonnes, et des zones B dans lesquelles les propriétés antiadhésives sont moins bonnes, comme représenté sur la figure 1. En effet, cette figure 1 représente en particulier une poêle de l'art antérieur comprenant une couche antiadhésive à base de PTFE et de particules métalliques orientées par un champ magnétique pour former un décor C.

Sur la figure 1, on distingue :
- des zones A qui correspondent à des zones pour lesquelles les lignes du champ magnétique appliqué pour la formation du décor sont parallèles à la surface du support, et
- des zones B, qui correspondent à des zones pour lesquelles les lignes du champ magnétique appliqué pour la formation du décor sont sensiblement perpendiculaires à la surface du support, de sorte que les particules magnétisables sont orientées en conséquence sensiblement perpendiculairement à la surface du support.

Les zones B se situent au niveau de l'emplacement des aimants qui ont été utilisés pour former le décor (aimantation la plus forte). On observe qu'au niveau de ces zones B, les propriétés d'antiadhérence sont moins bonnes, conduisant à l'accrochage des aliments D lors de leur cuisson dans l'article culinaire.

De plus, le procédé de réalisation de décor 3D proposé dans la demande WO 99/12662 ne permet d'obtenir que des décors monochromes.

Il est également connu de l'homme de l'art la demande américaine US 2007/0237891 qui divulgue de manière générale un dispositif et un procédé permettant de former des motifs à trois dimensions colorés dans un film de revêtement recouvrant un article.

La composition de revêtement pour former le film de revêtement comprend une résine thermoplastique en solution dans des solvants, des particules magnétisables sous forme de paillettes, des colorants ou des pigments, qui peuvent être de nature organique, ou métalliques (sous forme de poudre) ou encore photo-luminescents (par exemple du mica), un agent de réticulation (par exemple des résines amine, époxy ou polycarbodiimide, ou des composés à base d'isocyanate), et d'autres types d'additifs, tels que des antioxydants, des antimousses, des épaississants, absorbeurs d'UV, et des agents d'écoulement.

Pour obtenir le film de revêtement, la composition est solidifiée par évaporation des solvants, sans cuisson.

On obtient un film de revêtement ayant un effet de couleur homogène sur tout le motif 3D.

Cependant, le film de revêtement obtenu avec ce procédé de l'art antérieur ne permet pas d'obtenir une couche de revêtement antiadhésif à base de résine fluorocarbonée frittée formant un réseau continu, présentant à la fois un décor coloré à trois dimensions nettement visible et de très bonnes propriétés d'antiadhérence.

En effet, le document US 2007/0237891 ne vise pas à améliorer l'antiadhésivité d'un revêtement mais simplement à obtenir un revêtement ayant un effet de couleur homogène sur tout le motif 3D.

La présente invention a donc pour objet de fournir un article chauffant qui remédie à ces inconvénients.

Par article chauffant, on entend, au sens de la présente invention, un article qui possède son propre système de chauffage, ou qui est chauffé par un système extérieur et qui est apte à transmettre l'énergie calorifique apportée par ce système à un matériau ou objet tiers au contact dudit article.

Plus particulièrement, la présente invention a pour objet un article chauffant comprenant un support destiné à être chauffé. Ce support comprend une surface recouverte par un revêtement antiadhésif comprenant au moins une couche frittée à base de résine fluorocarbonée formant un réseau continu.

Selon l'invention, la couche frittée à base de résine fluorocarbonée comporte en outre un mélange de particules magnétisables et de particules non magnétisables, une partie desdites particules magnétisables étant inclinée d'un angle α par rapport à la surface du support, et les autres particules magnétisables étant sensiblement parallèles au support de manière à former un décor tridimensionnel.

Par couche frittée à base de résine fluorocarbonée, on entend, au sens de la présente invention une couche de résine fluorocarbonée se présentant sous forme particulaire avant frittage et formant un réseau continu après frittage.

Par particules non magnétisables, on entend, au sens de la présente invention des particules non magnétisables ou faiblement magnétisables ayant un moment magnétique nul ou faible (inférieur à 1 uem/g).

Par décor 3D ou hologramme coloré, on entend un décor permettant d'obtenir un effet visuel de profondeur en trois dimensions.

L'article chauffant selon l'invention comprend un revêtement antiadhésif qui conserve de bonnes propriétés antiadhésives après l'application d'un champ magnétique sur les particules magnétisables pour former un décor 3D coloré, comme représenté sur la figure 2. L'application du décor 3D ne modifie pas les propriétés d'antiadhésivité du revêtement.

Plus particulièrement, l'invention permet d'obtenir un revêtement antiadhésif présentant des propriétés antiadhésives homogènes sur toute sa surface, dont les zones B présentent de bonnes propriétés antiadhésives.

Le résultat obtenu par l'invention est surprenant car il est généralement admis par l'homme de l'art que l'introduction de charges (particules ou de paillettes ou autres) dans un revêtement à base de résine fluorocarbonée frittée, en particulier de PTFE, conduit à une diminution des propriétés d'antiadhésivité de ce revêtement. Il est aussi connu que plus l'on ajoute de charges, plus on accentue cette diminution de propriétés antiadhésives.

Or, la demanderesse a découvert de manière surprenante que la présence de particules non magnétisables dans la même couche de revêtement que celle contenant les particules magnétisables influence la formation du décor 3D et la répartition de la résine fluorocarbonée.

Ainsi, dans les zones B telles qu'illustrées sur la figure 2, le revêtement antiadhésif présente une épaisseur superficielle de résine fluorocarbonée identique ou presque à celle observée dans les zones A ne présentant pas de décor, sans saillie des particules magnétisables. La résine fluorocarbonée est ainsi étalée de manière régulière sur toute la surface du support, formant une couche superficielle sensiblement lisse.

En ce qui concerne la formation du décor 3D, la présence des particules non magnétisables dans la même couche de revêtement que celle contenant les particules magnétisables influence l'inclinaison des particules magnétisables dans les zones B où les lignes de champ magnétique sont perpendiculaires au support. Les particules non magnétisables viennent s'intercaler entre les particules magnétisables et les particules fluorocarbonnées. L'orientation des particules magnétisables peut ne pas être strictement perpendiculaire au support en raison de l'occupation de l'espace par les particules non magnétisables. Les particules magnétisables sont inclinées d'un angle α) par rapport à la surface du support de l'article culinaire. Cet angle α est avantageusement compris entre 20° et 89°. Il est de préférence compris entre 45° et 89°.

Le relèvement des particules magnétisables est gêné et le recouvrement par la résine fluorocarbonée est facilité. Les particules magnétisables inclinées sont donc recouvertes par une épaisseur de résine fluorocarbonée plus importante et suffisante pour assurer une bonne antiadhésivité. Les particules magnétisables ne font alors plus saillies sur la surface du revêtement antiadhésif.

L'introduction des particules non magnétisables même si elle réduit très légèrement le contraste visuel entre les zones A et les zones B, comme représenté sur la figure 2, ne perturbe pas la définition du décor.

Par rapport à la solution de l'art antérieur pour augmenter l'antiadhérence consistant à rajouter une couche supérieure de résine fluorocarbonée (notamment de PTFE) sur la couche de résine fluoroacarbonée comprenant des particules magnétisables, la solution proposée par l'invention présente également les avantages d'être moins couteuse et de fournir une couche antiadhérente plus résistante à l'abrasion dans le temps, sans nuire à la visibilité du décor. Le risque de jaunissement de la couche finale de PTFE et de manque de transparence est aussi évité.

En outre, par rapport à la solution de l'art antérieur pour augmenter l'antiadhérence consistant à modifier la distance entre l'aimant et les particules magnétisables, la solution proposée par l'invention présente également l'avantage d'être mise en oeuvre industriellement plus facilement. En effet, la modification de la distance entre l'aimant et les particules magnétisables est difficile à mettre en oeuvre d'un point de vue industriel en raison de la diversité des épaisseurs des articles culinaires proposés, car elle nécessiterait des ajustements nombreux nuisant à la productivité.

De plus, la présence de particules non magnétisables permet un meilleur mouillage de la résine fluorocarbonée.

La présente invention a encore pour objet un procédé de fabrication d'un article chauffant comprenant les étapes suivantes :
- préparation d'au moins une composition à base d'au moins une résine fluorocarbonée sous forme particulaire thermostable et résistant à au moins 200°C, ladite résine fluorocarbonée étant seule ou en mélange avec une résine d'accrochage thermostable et résistant à au moins 200°C ;
- application de ladite composition sur une surface dudit support pour former une couche de résine fluorocarbonée ;
- cuisson dudit article chauffant ainsi revêtu de ladite couche de résine fluorocarbonée comprenant un décor tridimensionnel à une température comprise entre 350°C et 450°C pour fritter ladite couche, de sorte à obtenir une couche frittée à base de résine fluorocarbonée formant un réseau continu.

Selon l'invention, la composition à base de résine fluorocarbonée comporte en outre un mélange de particules magnétisables et de particules non magnétisables, et un champ magnétique étant appliqué dans la couche de résine fluorocarbonée, avant l'étape de cuisson, de façon à orienter les particules magnétiques pour former un décor tridimensionnel dans ladite couche.

De manière avantageuse, le champ magnétique peut être appliqué après l'étape d'application de la composition à base de résine fluorocarbonée et avant l'étape de cuisson.

Dans le cas d'un revêtement antiadhésif à au moins deux couches (en l'occurrence une couche de primaire d'accrochage et une couche de finition), le procédé comporte les étapes suivantes :
- préparation d'une composition de primaire d'accrochage à base d'au moins une résine fluorocarbonée sous forme particulaire, en mélange avec au moins une résine d'accrochage thermostable et résistant à au moins 200°C ; préparation d'une composition de finition à base de résine fluorocarbonée sous forme particulaire thermostable et résistant à au moins 200°C, ladite résine fluorocarbonée étant seule ou en mélange avec au moins une autre résine fluorocarbonée thermostable et résistant à au moins 200°C, et comprenant en outre un mélange de particules magnétisables et de particules non magnétisables;

- application de ladite composition de primaire sur une surface dudit support pour former une couche de primaire d'accrochage ;
- application ladite composition de finition sur ladite composition de primaire pour former une couche de finition ;
- application d'un champ magnétique dans la couche de finition, de façon à orienter les particules magnétiques pour former un décor tridimensionnel dans ladite couche ; et
- cuisson dudit article ainsi revêtu à une température comprise entre 350°C et 450°C pour fritter lesdites couches de primaire et de finition.

Avantageusement, les particules fluorocarbonnées de la composition à base de résine fluorocarbonée présentent une dimension inférieure ou égale à 5 µm, et de préférence comprise entre 90 nm et 300 nm, cette taille de particules permettant de réaliser des films particulièrement denses.

La résine fluorocarbonée est avantageusement choisie parmi le polytétra-fluoroéthylène (PTFE), le copolymère de tétrafluoroéthylène et de perfluoropropylvinyléther (PFA), et le copolymère de tétrafluoroéthylène et d'hexafluoropropylène (FEP), et leurs mélanges.

Les autres résines thermostables résistant à au moins 200°C peuvent être un polyamide imide (PAI), un polyethersulfone (PES), un sulfure de polyphénylène (PPS), une polyéthercétone (PEK), une polyétheréthercétone (PEEK) ou une silicone.

D'autres avantages et particularités de la présente invention résulteront de la description qui va suivre, donnée à titre d'exemple non limitatif et faite en référence aux figures annexées :
- la figure 1 représente la photographie d'une poêle de l'art antérieur ;
- la figure 2 représente la photographie d'une poêle obtenue selon un mode de réalisation de l'invention ;
- la figure 3 représente une vue schématique d'une poêle obtenue selon un mode de réalisation de l'invention ;
- la figure 4 représente une vue schématique en coupe de cette poêle ;
- la figure 5 représente une série de six images 5.1 à 5.6 de microscopie électronique à balayage (MEB) d'une coupe de la poêle illustrée sur la figure 3 réalisées au niveau d'une zone B où les lignes de champ magnétique sont perpendiculaires au support ;
- la figure 6 représente une série de six images 6.1 à 6.2 de microscopie électronique à balayage (MEB) d'une coupe de la poêle illustrée sur la figure 3 réalisées au niveau d'une zone A où les lignes de champ magnétique sont parallèles au support.

Les figures 1 et 2 ont été précédemment commentées dans les parties introductives et descriptives de la présente invention.

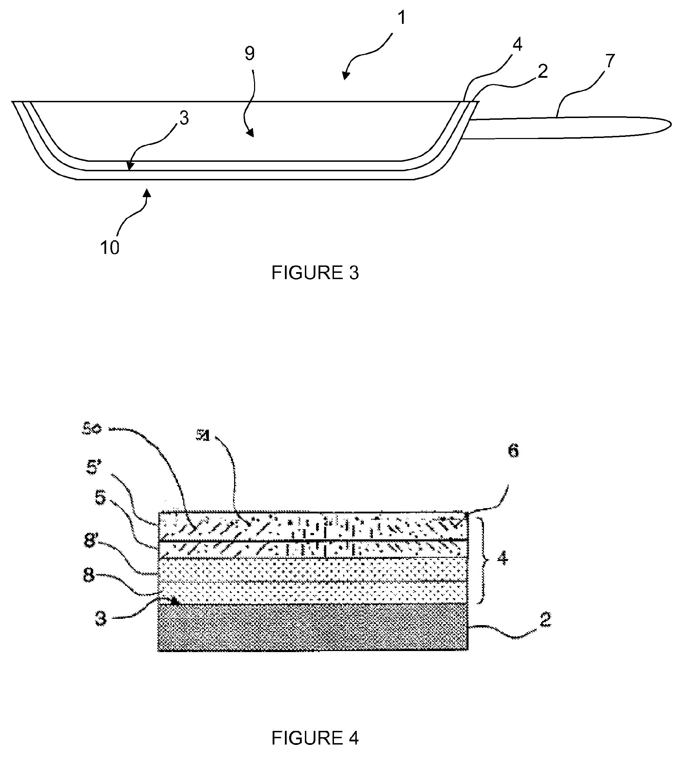

Sur la figure 3, on a représenté à titre d'exemple d'article culinaire selon l'invention, une poêle 1 comprenant un support 2 se présentant sous forme de calotte creuse et une poignée de préhension 7. Le support 2 comprend une face intérieure 9 qui est la face orientée du côté des aliments susceptibles d'être reçus dans la poêle 1, et une face extérieure 10 qui est destinée à être disposée vers une source de chaleur extérieure.

La figure 4 représente une coupe transversale détaillée de la poêle 1. Le support 2 est destiné à être chauffé et comprend, sur sa face intérieure 9, une surface 3 recouverte par un revêtement antiadhésif 4 comportant au moins une couche frittée 5, 5' à base de résine fluorocarbonée formant un réseau continu. Le revêtement antiadhésif 4 final est obtenu après cuisson. La résine fluorocarbonée qui est semi-cristalline se présente alors sous forme de particules liées les unes aux autres en formant un réseau continu fritté.

L'épaisseur totale de la couche 5, 5' de résine fluorocarbonée frittée peut être comprise entre 18 et 32 µm, mais est avantageusement comprise entre 21 et 27 µm, et mieux de l'ordre de 23 µm. Cette épaisseur est par ailleurs très rarement inférieure à 18 µm.

La couche frittée 5, 5' à base de résine fluorocarbonée comporte en outre un mélange de particules magnétisables 50 et de particules non magnétisables 51.

Le mélange de particules magnétisables 50 et de particules non magnétisables 51 représente entre 1% et 5% en poids du poids de la couche frittée à base de résine fluorocarbonée 5, 5'. Cette répartition permet d'obtenir de bonnes propriétés antiadhésives.

De manière préférée, le mélange de particules magnétisables 50 et de particules non magnétisables 51 représente entre 2% et 3% en poids du poids de la couche frittée à base de résine fluorocarbonée, ce qui permet d'améliorer encore plus les propriétés antiadhésives du revêtement.

Le pourcentage de particules non magnétisables 51 dans le mélange de particules magnétisables 50 et de particules non magnétisables 51 est compris entre 15% et 40% en poids par rapport au poids total du mélange de particules magnétisables et de particules non magnétisables.

Les particules non magnétisables 51 permettent d'une part de perturber l'orientation des particules magnétisables 50 dans les zones de champ élevé, et d'autre part d'apporter une coloration supplémentaire.

Une teneur trop élevée en particules non magnétisables 51, supérieure à 40 % en poids du poids total du mélange de particules magnétisables et non magnétisables, conduit à un effet tridimensionnel pas assez visible. Une tenue trop faible, inférieure à 15 % en poids du poids total du mélange de particules magnétisables et non magnétisables, ne permet pas de garantir l'uniformité de l'anti-adhésivité.

De manière préférée, le mélange de particules magnétisables et de particules non magnétisables comprend 1/3 de particules non magnétisables, et 2/3 de particules magnétisables. On réalise alors le meilleur compromis entre la définition du décor et des performances antiadhésives homogènes.

Les particules non magnétisables 51 sont caractérisées par leur dimension (D90) comprise entre 20 et 250 % de la dimension (D90) des particules magnétisables 50.

Par le terme « D90 », on entend, au sens de la présente invention la dimension maximale que présente 90% des particules.

Ces dimensions, et ces concentrations de particules non magnétisables permettent d'obtenir un décor C à trois dimensions très contrasté, comme représenté sur la figure 2, et une antiadhésivité homogène sur toute la surface du revêtement antiadhésif 4.

Le choix de la dimension des particules non magnétisables 51 résulte d'un compromis. Si elles sont trop petites, elles ne permettent pas d'influer suffisamment sur l'orientation des particules magnétisables pour améliorer l'antiadhésivité. Si les particules non magnétisables sont trop grosses, elles deviennent trop protubérantes, et gênent le mécanisme de migration des particules de résine fluorocarbonée qui entraine l'amélioration de l'antiadhésivité.

De préférence, les particules magnétisables 50 présentent une dimension D50 inférieure ou égale à 23 µm.

Par le terme « D50 », on entend, au sens de la présente invention la dimension maximale que présente 50% des particules.

De préférence, les particules non magnétisables 51 présentent une dimension D90 inférieure ou égale à 60 µm. Une taille supérieure à cette valeur ne facilite pas leur insertion des particules non magnétisables 51 dans le film : en effet, elles peuvent nuire à l'antiadhésivité en raison de leur protubérance.

Les particules magnétisables 50 et les particules non magnétisables 51 se présentent avantageusement sous forme de paillettes, c'est-à-dire sous une forme essentiellement plate et allongée.

Les particules non magnétisables 51 peuvent aussi avoir des formes diverses comme une forme sphérique ou ovoïde, par exemple. Elles peuvent avoir une forme régulière ou irrégulière.

Les particules non magnétisables 51 peuvent être constituées de mica, d'aluminium, ou de mica enrobé de dioxyde de titane (Iriodin® 100, Iriodin® 111 et Iriodin® 153 de « Merck » par exemple).

Les particules magnétisables 50 peuvent être constituées de particules céramiques enrobées d'un matériau ferromagnétique.

En particulier, les particules magnétisables 50 peuvent être des particules de fer présentant un D50 de l'ordre de 18µm et un diamètre D90 de l'ordre de 28 µm (par exemple les particules commercialisées par la société Eckart sous la dénomination commerciale STAPA® TA FERRICON 200), ou des particules d'oxyde de fer (de préférence avec du fer ferritique), ou encore des particules de mica ou d'oxyde de fer Fe₃O₄ (par exemple les particules commercialisées par la société Merck sous la dénomination commerciale COLORONA® BLACKSTAR BLUE présentant un diamètre un D50 de 18 à 23 µm et un D90 de 43µm).

Les particules magnétisables et/ou les particules non magnétisables sont colorées en surface.

Par coloration en surface d'une particule, on entend, au sens de la présente invention, une coloration en masse visible en surface ou un enrobage apportant la couleur à la particule.

De manière avantageuse, les particules magnétisables et/ou les particules non magnétisables présentent une structure coeur-enveloppe, dans laquelle l'enveloppe réalisée en 1 ou plusieurs couches apporte la coloration soit par absorption soit par interférométrie.

A titre d'exemple de particules magnétisables 50 à structure coeur-enveloppe, on peut notamment citer les particules de mica enrobées d'oxyde de fer (ferritique).

A titre d'exemple de particules non magnétisables 51 à structure coeur-enveloppe, on peut notamment citer les particules de mica enrobées de TiO₂.

L'association de particules céramiques magnétisables et de particules colorées non magnétisables permet d'obtenir une palette de couleurs étendue pour les décors, tout en fournissant une antiadhésivité homogène sur toute la surface du revêtement antiadhésif 4.

Les particules colorées non magnétisables apportent des possibilités de couleurs nouvelles.

La couche frittée à base de résine fluorocarbonée 5, 5' peut comprendre une seule résine fluorocarbonée ou un mélange de résines fluorocarbonées, seul(e) ou en mélange avec d'autres résines thermostables.

La résine fluorocarbonée est telle que définie précédemment, c'est-à-dire qu'elle peut avantageusement être choisie parmi le polytétra-fluoroéthylène (PTFE), le copolymère de tétrafluoroéthylène et de perfluoropropylvinyléther (PFA), et le copolymère de tétrafluoroéthylène et d'hexafluoropropylène (FEP), et leurs mélanges.

Les autres résines thermostables résistant à au moins 200°C sont également tels que définis précédemment, c'est à dire qu'ils peuvent être un polyamide imide (PAI), un polyéthersulfone (PES), un sulfure de polyphénylène (PPS), une polyéthercétone (PEK), une polyétheréthercétone (PEEK) ou une silicone.

Le support 2 peut être métallique, en céramique, en verre, ou en plastique.

Le support 2 peut être en aluminium et en alliage d'aluminium, anodisé ou non, en acier inoxydable ferritique ou austénitique, fonte, fer ou cuivre. Le support 2 peut être réalisé avec une combinaison de ces matériaux précités pour tout ou partie de sa surface.

De manière surprenante, le support 2 peut être réalisé en métaux magnétisables (par exemple en acier inoxydable ferritique).

Le décor 3D est formé par l'application d'un champ magnétique. Les particules magnétisables s'orientent en suivant les lignes du champ magnétique.

En traversant un matériau ferritique, le champ magnétique a tendance à se répartir de façon uniforme sur la surface de la poêle. Le décor n'est donc plus visible car uniforme lui aussi.

L'utilisation d'aimants de forte puissance (champ magnétique supérieur à 0,2 T, qui est variable selon la taille de l'article en matériau ferritique) ou l'application d'un champ magnétique de forme similaire mais de polarité inversée de part et d'autre de l'article à décorer, permettent d'obtenir un décor sur ce type de matériau magnétisable.

L'article chauffant 1 peut comprendre une couche de base dure, continue ou discontinue, recouvrant la surface 3 du support 2 (non représenté sur les figures). La couche de base dure est recouverte du revêtement antiadhésif 4 qui forme la couche externe de l'article chauffant 1.

Selon un premier mode de réalisation de l'article chauffant avec une couche de base dure, celle-ci est une couche d'émail rugueuse contenant moins de 50 ppm de plomb et moins de 50 ppm de cadmium et présentant les caractéristiques suivantes :
- une dureté supérieure à celle du métal ou de l'alliage métallique constitutif du support 2,
- un point de fusion compris entre celui du métal ou de l'alliage métallique constitutif du support 2 et celui de la (ou des) résine(s) frittée(s) du revêtement antiadhésif 4, et
- une rugosité de surface Ra comprise entre 2 et 20 µm.

Selon un deuxième mode de réalisation de l'article chauffant avec une couche de base dure, celle-ci est en un matériau céramique et/ou métallique et/ou polymère.

Le revêtement antiadhésif 4 peut comprendre au moins une couche de primaire d'accrochage 8, 8' comportant de la résine fluorocarbonée et, le cas échéant, de la résine d'accrochage, des charges minérales ou organiques et/ou des pigments. La ou les couches de primaire d'accrochage 8, 8' sont recouvertes par au moins une couche frittée 5, 5' à base de résine fluorocarbonée comportant en outre un mélange de particules magnétisables 50 et de particules non magnétisables 51.

Dans le mode de réalisation représenté sur la figure 4, l'article chauffant 1 comprend un support 2 recouvert d'un revêtement antiadhésif 4 comprenant successivement deux couches de primaire d'accrochage 8, 8', qui sont elles mêmes recouvertes de deux couches de finition 5, 5' à base de résine fluorocarbonée frittée comportant en outre un mélange de particules magnétisables 50 et de particules non magnétisables 51. La composition chimique de ces couches peut être différente.

Les deux couches frittées 5, 5' à base de résine fluorocarbonée peuvent comprendre des teneurs différentes de particules magnétisables et de particules non magnétisables. A titre d'exemple, la première couche frittée 5 à base de résine fluorocarbonée comprend une proportion de mélange de particules magnétisables et de particules non magnétisables plus importante que la deuxième couche frittée 5' à base de résine fluorocarbonée.

D'autres dispositions de couches frittées à base de résine fluorocarbonée sont également possibles.

En variante, le revêtement antiadhésif 4 peut comprendre au moins un motif qui comporte une composition pigmentaire thermochrome avec au moins un pigment SC thermochrome, de façon à former un indicateur de température coloré (par exemple celui commercialisé par TEFAL sous la dénomination commerciale «THERMOSPOT®»). Ce motif qui comporte une composition pigmentaire thermochrome avec au moins un pigment semi-conducteur (SC) thermochrome est formé dans une des couches frittées 5, 5' à base de résine fluorocarbonée.

Par composition pigmentaire thermochrome, on entend au sens de la présente invention, une substance, un mélange ou une composition qui change de couleur en fonction de la température de manière réversible.

Le décor est obtenu après application d'un champ magnétique. Ce champ magnétique peut être appliqué pendant la pulvérisation des couches, ou après la pulvérisation des couches. Il est cependant avantageusement appliqué après l'application des couches de finition (mais avant la cuisson).

Le champ magnétique peut être réalisé à l'aide d'aimants permanents ou d'électroaimants à façon pour obtenir le décor souhaité. Les formes possibles sont innombrables. L'utilisation de plusieurs aimants séparés permet d'obtenir des décors inédits et/ou de différentes intensités et/ou floutés.

Dans l'exemple de la figure 2, le décor C est obtenu au moyen d'aimants séparés.

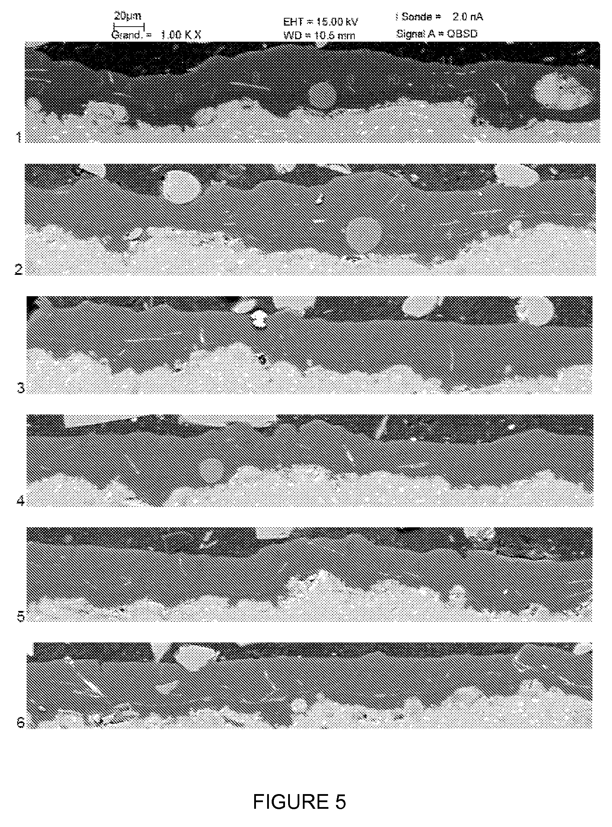

La figure 5 représente une série de six images 5.1 à 5.62 de microscopie électronique à balayage (MEB) d'une coupe de la poêle 1 illustrée sur la figure 3 réalisées au niveau d'une zone B où les lignes de champ magnétique sont perpendiculaires au support.

Dans cette zone B, les particules magnétisables tendent à s'orienter selon les lignes de champ perpendiculaires au support. Les figures 5.1 à 5.6 (coupes micrographiques) montrent que les particules magnétisables sont inclinées d'un angle α par rapport à la surface du support 2, qui est sur ces figures compris entre 45 et 75° : la présence des particules non magnétisables perturbe l'alignement des particules magnétisables selon l'orientation des lignes de champ (angle α de 90°) : l'orientation des particules magnétisables selon une angle a compris entre 45 et 75° empêche la saillie des particules et limite leur perception (visibilité).

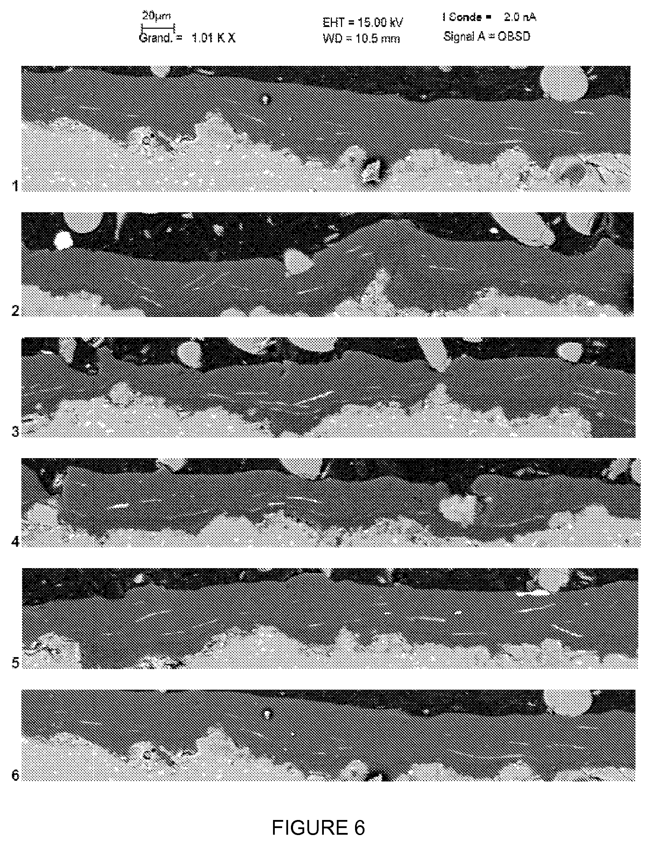

La figure 6 représente une série de six images 6.1 à 6.6 de microscopie électronique à balayage (MEB) d'une coupe de la poêle illustrée sur la figure 3 réalisées au niveau d'une zone A où les lignes de champ magnétique sont parallèles au support.

Dans cette zone A, les particules magnétisables sont orientées selon les lignes de champ parallèles au support.

Les figures 6.1 à 6.6 (coupes micrographiques) montrent que les particules magnétisables sont inclinées d'un angle α par rapport à la surface du support 2 qui est compris entre 0 et 20°. Cette orientation donne une bonne visibilité aux particules.

La combinaison de zones juxtaposées à forte et faible visibilité contribue à donner un effet de relief au décor.

### EXEMPLES

### Produits

### Supports :

- supports en aluminium de diamètre 26 cm dégraissés et sablés sur ses deux faces principales et présentant une rugosité moyenne arithmétique Ra mesurée comprise entre 4 et 6 µm,
- supports lisses en aluminium de diamètre 26 cm, simplement dégraissés,
- supports en aluminium anodisé (via une anodisation dure peu ou pas colmatée (c'est-à-dire avec une porosité ouverte) et présentant un diamètre 26 cm,
- supports en acier inoxydable de diamètre 26 cm, sablés sur leur face intérieure et présentant une rugosité moyenne arithmétique Ra mesurée comprise entre 2 et 5 µm.

### Composition de primaire

- dispersion de PTFE à 58% d'extrait sec commercialisée sous la dénomination commerciale TF 5035Z par la société Dyneon,
- dispersion de noir de carbone à 25% d'extrait sec commercialisée sous la dénomination commerciale DERUSSOL par la société Huntsmann,
- PAI solubilisée (masse moléculaire 38000 g à 9,5% d'extrait sec dans un mélange eau/NMP 3/1 en poids),
- alkylphénol éthoxylé à titre de tensio-actif non-ionique,
- silice colloïdale commercialisée sous la dénomination commerciale LUDOX AM 30 par la société GRACE DAVISON : il s'agit d'une silice colloïdale non modifiée en surface avec une surface spécifique de 220m²/g environ et qui se présentant sous forme de dispersion aqueuse avec un extrait sec de 30%.

### Compositions de finition

- dispersion de PTFE à 58% d'extrait sec avec une taille de particules de 220 nm, commercialisée sous la dénomination commerciale TF 5035Z par la société Dyneon,
- dispersion de PTFE à 60% d'extrait sec avec une taille de particules de 290 nm, commercialisée sous la dénomination commerciale Polyflon™ D410 par la société Daikin,
- dispersion de PFA à 50% d'extrait sec avec une taille de particules de 90 nm, commercialisée sous la dénomination commerciale PFA 6910Z par la société Dyneon,
- poudre de PTFE commercialisée sous la référence TF9207 par la société Dyneon avec une taille de particules de 4 µm et présentant une surface spécifique BET de 17 m2/g et un indice de fluidité MFR de 6 g/10 min,
- particules magnétisables de fer présentant un diamètre D50 de l'ordre de 18 µm et un diamètre D90 de l'ordre de 28 µm, ces particules étant commercialisées sous la dénomination commerciale STAPA® TA FERRICON 200 par la société ECKART,
- particules non magnétisables mica lamellaire de diamètre D90∼6 µm commercialisée sous la dénomination commerciale IRIODIN® 111 par la société MERCK,
- particules faiblement magnétisables de mica ou d'oxyde de fer présentant une diamètre D50 compris entre 18 et 23 µm et un diamètre D90 de l'ordre de 43 µm, commercialisées sous la dénomination commerciale COLORONA BLACKSTAR BLUE par la société MERCK,
- alkylphénol polyéthoxylé à titre de tensio-actif non ionique commercialisé sous le nom de Triton X100
- xylène à titre de solvant,
- acide oléique à titre de mouillant,
- triéthanolamine à titre de régulateur de pH,
- polypropylène glycol à titre de co-solvant,
- polyéthersulfone en flocons commercialisée sous le nom de ULTRASON® par la société BASF,
- NEP (solvant),
- Agent d'étalement siliconé commercialisée sous le nom de PA 56 par la société DOW CORNING.

### Tests

### Evaluation du maintien de l'antiadhésivité lors d'un test d'évaluation de la résistance à l'abrasion

Dans ce test, on combine un test d'antiadhésivité du type test au lait carbonisé avec un test de résistance à l'abrasion.

L'évaluation quantitative du maintien de l'antiadhésivité (par évaluation de la vitesse de perte d'antiadhésivité) lors de ce test est réalisée en pratique en sommant les cotations d'antiadhésivité obtenues par le test au lait carbonisé après chaque série de 1000 passages successifs d'un tampon abrasif de type SCOTCH BRITE (marque déposée) vert, dans la limite soit de l'apparition de la première rayure (correspondant à l'apparition du métal constitutif du support), soit de l'obtention d'une perte totale d'antiadhésivité du revêtement. A la somme de ces cotations, ci-après référencée par S dans l'échelle de notation indiquée ci-après, correspond une note de performance.

Par le test au lait carbonisé, on évalue la perte d'antiadhésivité du revêtement en fonction du nettoyage plus ou moins facile du lait carbonisé. La cotation est la suivante :
- 100 : signifie que la pellicule de lait carbonisé est éliminée complètement par simple application d'un jet d'eau du robinet de cuisine ;
- 50 : signifie qu'il faut ajouter des mouvements circulaires de l'objet sous le jet d'eau pour décoller complètement la pellicule carbonisée ;
- 25 : signifie qu'il faut laisser tremper pendant 10 minutes et éventuellement forcer le départ en passant une éponge humide pour éliminer complètement la pellicule ;
- 0 : signifie qu'à l'issue du processus précédent, tout ou partie de la pellicule carbonisée reste adhérente.

Par ailleurs, l'homogénéité du revêtement antiadhésif est également observée, étant entendu que, lorsque celle-ci est hétérogène (c'est-à-dire lorsque le revêtement comporte des zones où l'antiadhésivité est bonne, qui alterne avec des zones où l'antiadhésivité est mauvaise), la notation qui est alors donnée à l'antiadhésivité est celle de la zone de revêtement où l'antiadhésivité est la plus mauvaise.

La performance globale à ce test est donc donnée par la cotation suivante :
- 0 : correspond à S=0 et signifie qu'il y a une perte totale d'antiadhésivité ;
- 1 : correspond à S compris entre 1 et 250 et signifie qu'il y a une perte très rapide de l'antiadhésivité au cours du test ;
- 2 : correspond à S compris entre 251 et 500 et signifie qu'il y a une perte rapide de l'antiadhésivité au cours du test ;
- 3 : correspond à S compris entre 501 et 1000 et signifie qu'il y a une perte à vitesse modérée de l'antiadhésivité au cours du test ;
- 4 : correspond à S compris entre 1001 et 1500 et signifie qu'il y a une perte lente de l'antiadhésivité au cours du test ;
- 5 : correspond à S supérieure ou égale à 1501 et signifie qu'il y a une perte très lente de l'antiadhésivité au cours du test.

### Evaluation des performances en vieillissement

On évalue la tenue d'un revêtement antiadhésif sur un substrat en aluminium anodisé ou non ou en acier inoxydable par un test d'usage pour simuler le vieillissement de l'article au bout d'une durée de 3 ans.

Le test utilisé dans les exemples ci-après est basé sur des cuissons répétées et intensives de divers aliments (pommes de terre, haricots, steaks, cotes de porc et crêpes) connus pour leur agressivité spécifique.

De manière régulière au cours de ce test d'usage, l'antiadhésivité est évaluée au moyen du test à l'oeuf conformément la norme NF D 21-511, comme suit :
- la face intérieure d'un article culinaire est huilée avec une huile végétale à l'aide d'un tissu doux, avec une quantité d'huile de l'ordre de 2 cm³ d'huile pour une poêle de diamètre entre 240 mm et 280 mm ;
- puis, on nettoie l'article dans de l'eau chaude contenant du liquide vaisselle, puis on le rince d'abord à l'eau chaude puis à l'eau froide, et enfin on le sèche ;
- on contrôle ensuite la résistance à l'adhésion d'un oeuf cuit dans la poêle en procédant comme suit :
   ▪ on place la poêle sur une plaque de chauffage de manière que sa surface intérieure soit chauffée jusqu'à une température entre 150°C et 170°C ;
   ▪ on casse un oeuf et on le fait cuire au centre de la poêle, sans ajout de matière grasse, pendant 8 à 9 minutes ;
   ▪ quand l'oeuf est cuit, on l'enlève à l'aide d'une spatule ;
   ▪ puis on laisse la poêle refroidir à température ambiante ; et
   ▪ on nettoie la poêle à l'aide d'une éponge humide.

Les propriétés d'antiadhésivité sont liées à la facilité avec laquelle il est possible d'éliminer les résidus d'oeuf, conformément aux opérations précédentes et selon l'échelle de valeurs suivante :
▪ on attribue 100 points si l'oeuf entier se détache avec un simple petit coup de poignée,
▪ on attribue 50 points si l'oeuf entier se détache simplement à l'aide d'une spatule sans laisser de résidus,
▪ on attribue 25 points si les résidus d'oeuf se détachent par frottement avec une éponge humide,
▪ on attribue 0 point si les résidus d'oeuf ne s'enlèvent pas avec l'éponge humide.

### Préparation d'une composition de primaire CP1

On réalise une composition de primaire CP1 d'accrochage comportant les composés suivants, leurs quantités respectives étant indiquées en g pour 100 g de composition :

| **Composition de primaire CP1 :** | |
|---|---|
| PFA (50% extrait sec) | : 9,1 g |
| Dispersion PTFE (60% extrait sec) | : 22,6 g |
| Dispersion Noir de carbone (25% extrait sec) | : 4,1 g |
| PAI en phase aqueuse + solvant (NMP) (9,5% extrait sec) | : 43,4 g |
| alkylphénol éthoxylé (13%) | : 2,1 g |
| Silice colloïdale (30% sec) | : 6,2g |
| NH₄OH (d=0.9) | : 0,2 g |
| Eau | : 12,3 g |
| Total | : 100 g |

### Préparation des compositions de finition

On réalise à titre de comparaison une composition de finition CFC1 exempte de particules non magnétisables, qui comporte les composés suivants, leurs quantités respectives étant indiquées en g pour 100 g de composition :

| **Composition de finition CFC1 :** | |
|---|---|
| dispersion PTFE à 58% d'extrait sec (taille de particules 220 nm) | : 85,4 g |
| Alkylphénol polyéthoxylé | 0,3 g |
| xylène | : 3 g |
| acide oléique | : 0,1 g |
| triéthanolamine | : 0,2 g |
| particules magnétisables | : 1 g |
| eau | : 9 g |
| monopropylène glycol | : 1 g |
| Total | : 100 g |

On réalise ensuite sept compositions de finition selon l'invention CF2 à CF8 comportant notamment un mélange de particules magnétisables et de particules non magnétisables, dont les différents constituants avec leurs quantités respectives sont indiqués ci-après en g pour 100 g de composition :

| **Composition de finition CF2 :** | |
|---|---|
| dispersion PTFE à 58% d'extrait sec (taille de particules 220 nm) | : 85,4 g |
| Alkylphénol polyéthoxylé | : 0,3 g |
| xylène | : 3 g |
| acide oléique | : 0,1 g |
| triéthanolamine | : 0,2 g |
| particules magnétisables | : 0,83 g |
| particules non magnétisables (taille de particules D90 ~ 6 µm) | : 0,17 g |
| eau | : 9 g |
| monopropylène glycol | : 1 g |
| Total | : 100 g |

La composition de finition CF3 se différencie de la composition CF2 par un ratio pondéral des particules magnétisables sur le total des particules magnétisables et particules non magnétisables de 33% au lieu de 17% pour CF2

| **Composition de finition CF3 :** | |
|---|---|
| dispersion PTFE à 58% d'extrait sec (taille de particules 220 nm) | : 85,4 g |
| Alkylphénol polyéthoxylé | : 0,3 g |
| xylène | : 3 g |
| acide oléique | : 0,1 g |
| triéthanolamine | : 0,2 g |
| particules magnétisables | : 0,67 g |
| particules non magnétisables (taille de particules D90 ~ 6 µm) | : 0,33 g |
| eau | : 9 g |
| monopropylène glycol | : 1 g |
| Total | : 100 g |

La composition de finition CF4 se différencie de la composition CF2 par d'une part un ratio pondéral de particules magnétisables sur le total des particules magnétisables et particules non magnétisables de 25% au lieu de 17% pour CF2, et d'autre part un diamètre de particules non magnétisables .

| **Composition de finition CF4 :** | |
|---|---|
| dispersion PTFE à 58% d'extrait sec (taille de particules 220 nm) | : 85,4 g |
| Alkylphénol polyethoxylé | : 0,3 g |
| xylène | : 3 g |
| acide oléique | : 0,1 g |
| triéthanolamine | : 0,2 g |
| particules magnétisables | : 0,75 g |
| particules non magnétisables (taille de particules D90 ~ 43 µm) | : 0,25 g |
| eau | : 9 g |
| monopropylène glycol | : 1 g |
| Total | : 100 g |

La composition de finition CF5 se différencie de la composition CF4 par un mélange de dispersions de PTFE et de PFA remplaçant, en quantité égale, la dispersion de PTFE de la composition CF4.

| **Composition de finition CF5 :** | |
|---|---|
| dispersion PTFE à 58% d'extrait sec (taille de particules 220 nm) | : 42,7 g |
| Dispersion de PFA à 58% d'extrait sec (taille de particules 90 nm) | : 42,7 g |
| Alkylphénol polyéthoxylé | : 0,3 g |
| xylène | : 3 g |
| acide oléique | : 0,1 g |
| triéthanolamine | : 0,2 g |
| particules magnétisables | : 0,75 g |
| particules non magnétisables (taille de particules D90 ~ 43 µm) | : 0,25 g |
| eau | : 9 g |
| monopropylène glycol | : 1 g |
| Total | : 100 g |

La composition de finition CF6 se différencie de la composition CF5 par l'ajout de poudre de PTFE à 100% d'extrait sec à la dispersion de PTFE.

| **Composition de finition CF6 :** | |
|---|---|
| dispersion PTFE à 58% d'extrait sec (taille de particules 220 nm) | : 42,8 g |
| Poudre de PTFE à 100% d'extrait sec | : 4,3 g |
| Dispersion de PFA à 58% d'extrait sec (taille de particules 90 nm) | : 38,4 g |
| Alkylphénol polyéthoxylé | : 0,3 g |
| xylène | : 3 g |
| acide oléique | : 0,1 g |
| triéthanolamine | : 0,2 g |
| particules magnétisables | : 0,75 g |
| particules non magnétisables (taille de particules D90 ~ 43 µm) | : 0,25 g |
| eau | : 9 g |
| monopropylène glycol | : 1 g |
| Total | : 100 g |

La composition de finition CF7 se différencie de la composition CF6 principalement par le remplacement total de la dispersion de PTFE par la poudre de PTFE à 100% d'extrait sec et la présence de polyéthersulfone.

| **Composition de finition CF7 :** | |
|---|---|
| Poudre de PTFE à 100% d'extrait sec | : 12 g |
| Polyéthersulfone en granulés | : 12 g |
| NEP (solvant) | : 65 g |
| Xylène | : 8 g |
| Agent d'étalement silicone PA56 | : 2 g |
| particules magnétisables | : 0,75 g |
| particules non magnétisables (taille de particules D90 ~ 43 µm) | : 0,25 g |
| eau | : 9 g |
| monopropylène glycol | : 1 g |
| Total | : 100 g |

### Réalisation de revêtements antiadhésifs sur des supports en aluminium

On enduit de manière classique l'une des faces d'un support en aluminium par la composition CP1 pour former une couche de primaire humide, puis l'une des compositions de finition CFC1 (exemple comparatif), et CF2 à CF7 (exemples selon l'invention) sur la couche de primaire humide pour former une couche de finition.

Puis on applique un champ magnétique à l'aide d'un aimant permanent ayant une puissance magnétique comprise entre 50 et 100 mT, qui conduit à l'orientation des particules magnétiques pour former un décor tridimensionnel dans la couche de finition.

Enfin, on procède à la cuisson du support ainsi revêtu à une température de 415°C.

Les supports ainsi revêtus sont ensuite soumis à l'ensemble des tests précédemment indiqués dans la présente demande.

Les résultats obtenus à l'issue de ces différents tests son rassemblés dans le tableau 1 de résultats ci-après.

Dans ce tableau, l'exemple 1 correspond à un revêtement antiadhésif dont la composition de finition est la composition CFC1, et les exemples 2 à 7 correspondent respectivement à un revêtement antiadhésif dont la composition de finition est l'une des compositions CF2 à CF7, respectivement (c'est-à-dire l'exemple 2 correspond à une couche de finition CF2 et l'exemple 7 à une couche de finition CF7).

### Réalisation de revêtements antiadhésifs sur des supports en aluminium anodisé

On procède de la même manière que précédemment avec les supports en aluminium, mais en en changeant la nature : on utilise ici un support en aluminium anodisé au lieu d'un support en aluminium et pour la réalisation du revêtement antiadhésif, on utilise seulement la composition de primaire CP1 et les compositions de finition CF3 et CF4.

Les supports revêtus conformément au procédé de l'invention sont ensuite soumis à l'ensemble des tests précédemment indiqués dans la présente demande.

Les résultats obtenus à l'issue de ces différents tests sont rassemblés au niveau des exemples 3' et 4' dans le tableau 1 de résultats ci-après : ces exemples 3' et 4' sont identiques aux exemples 3 et 4 respectivement, hormis la nature du support, qui est ici de l'aluminium anodisé au lieu de l'aluminium.

### Réalisation de revêtements antiadhésifs sur des supports en acier inoxydable ferritique

On procède de la même manière que précédemment avec les supports en aluminium anodisés ou non, mais avec un support en acier inoxydable ferritique. Pour la réalisation du revêtement antiadhésif, on utilise seulement la composition de primaire CP1 et la composition de finition CF3.

Le champ magnétique est généré par un électro-aimant permettant d'obtenir une valeur de 0.2 T

Le support revêtu conformément au procédé de l'invention est ensuite soumis à l'ensemble des tests précédemment indiqués dans la présente demande.

Les résultats obtenus à l'issue de ces différents tests son rassemblés au niveau de l'exemple 3" dans le tableau 1 de résultats ci-après : cet exemple 3" est identique aux exemples 3 et 3', hormis la nature du support, qui est ici de l'acier inoxydable ferritique au lieu de l'aluminium anodisé (exemple 3') ou non (exemple 3).

**Tableau 1**

| | | | | Evaluation du maintien de l'antiadhésivité lors d'un test de résistance à l'abrasion | |
|---|---|---|---|---|---|
| exemples | Nature du support | Présence de particules non magnétisables | Test de vieillissement | Notation | Homogénéité de l'antiadhésivité du revêtement |
| 1 | Aluminium | Non | 0 | 0 | NON |
| 2 | Aluminium | oui | 25 | 3 | OUI |
| 3 | Aluminium | oui | 50 | 4 | OUI |
| 3' | aluminium anodisé | oui | 100 | 5 | OUI |
| 3" | Acier inoxydable | oui | 50 | 4 | OUI |
| 4 | Aluminium | oui | 50 | 3 | OUI |
| 4' | aluminium anodisé | oui | 50 | 4 | OUI |
| 5 | Aluminium | oui | 50 | 3 | OUI |
| 6 | Aluminium | oui | 50 | 3 | OUI |
| 7 | aluminium | oui | 25 | 2 | OUI |

## Revendications

1. Article chauffant (1) comprenant un support (2) destiné à être chauffé, ledit support (2) comprenant une surface (3) recouverte par un revêtement antiadhésif (4), ledit revêtement antiadhésif (4) comprenant au moins une couche frittée (5, 5') à base de résine fluorocarbonée formant un réseau continu,
**caractérisé en ce que** ladite couche frittée (5, 5') est une couche de finition qui comporte en outre un mélange de particules magnétisables (50) et de particules non magnétisables (51), une partie desdites particules magnétisables étant inclinées d'un angle α par rapport à la surface du support (2) et les autres particules magnétisables étant sensiblement parallèles au support (2) de manière à former un décor tridimensionnel.

2. Article chauffant (1) selon la revendication 1, en ce que l'angle d'inclinaison α d'une partie des particules magnétisables (50) est comprise entre 20° et 89°, et de préférence entre 45° et 89°.

3. Article chauffant (1) selon la revendication 1 ou 2, **caractérisé en ce que** le mélange de particules magnétisables (50) et de particules non magnétisables (51) représente entre 1% et 5%, et de préférence entre 2% et 3% en poids du poids de la couche frittée (5,5') à base de résine fluorocarbonée.

4. Article chauffant (1) selon l'une quelconque des revendications 1 à 3, **caractérisé en ce que** le pourcentage de particules non magnétisables (51) dans le mélange de particules magnétisables et de particules non magnétisables est compris entre 15% et 40% en poids par rapport au poids total du mélange de particules magnétisables et de particules non magnétisables.

5. Article chauffant (1) selon l'une quelconque des revendications 1 à 4, **caractérisé en ce que** les particules magnétisables (50) présentent une dimension D50 inférieure ou égale à 23 µm.

6. Article chauffant (1) selon l'une quelconque des revendications 1 à 5, **caractérisé en ce que** les particules non magnétisables (51) présentent une dimension D90 comprise entre 20% et 250% de la dimension des particules magnétisables.

7. Article chauffant (1) selon l'une quelconque des revendications 1 à 6, **caractérisé en ce que** les particules magnétisables et les particules non magnétisables se présentent sous forme de paillettes (6).

8. Article chauffant (1) selon l'une quelconque des revendications 1 à 7, **caractérisé en ce que** les particules magnétisables et/ou les particules non magnétisables sont colorées en surface.

9. Article chauffant (1) selon la revendication 8, **caractérisé en ce que** les particules magnétisables et/ou les particules non magnétisables présentent une structure coeur-enveloppe.

10. Article chauffant (1) selon l'une quelconque des revendications 1 à 9, **caractérisé en ce que** les particules non magnétisables sont constituées de mica, d'aluminium, ou de mica enrobé de dioxyde de titane.

11. Article chauffant (1) selon l'une quelconque des revendications 1 à 10, **caractérisé en ce que** les particules magnétisables sont constituées de fer, d'oxyde de fer, d'aluminium enrobé de fer, ou de mica enrobé de fer, le fer se présentant sous forme ferritique.

12. Article chauffant (1) selon l'une quelconque des revendications 1 à 11, **caractérisé en ce que** la couche frittée (5, 5') comprend une seule résine fluorocarbonée ou un mélange de résines fluorocarbonée, seul(e) ou en mélange avec d'autres résines thermostables.

13. Article chauffant (1) selon la revendication 12, **caractérisé en ce que** la résine fluorocarbonée est choisie parmi le polytétrafluoroéthylène (PTFE), le copolymère de tétrafluoroéthylène et de perfluoropropylvinyléther (PFA), et le copolymère de tétrafluoroéthylène et d'hexafluoropropylène (FEP), et leurs mélanges.

14. Article chauffant (1) selon l'une quelconque des revendications 1 à 13, **caractérisé en ce qu'**il comprend une couche de base dure, continue ou discontinue, recouvrant ladite surface (3) du support (2), ladite couche de base dure étant recouverte dudit revêtement antiadhésif (4).

15. Article chauffant (1) selon la revendication 14, **caractérisé en ce que** la base dure est une couche d'émail rugueuse présentant les caractéristiques suivantes :
• une dureté supérieure à celle du métal ou de l'alliage métallique constitutif du support (2),
• un point de fusion compris entre celui du métal ou de l'alliage métallique constitutif du support (2) et celui de la (ou des) résine(s) frittée(s) du revêtement antiadhésif (4), et
• une rugosité de surface Ra comprise entre 2 µm et 20 µm.

16. Article chauffant (1) selon la revendication 14, **caractérisé en ce que** la base dure base dure est en un matériau céramique et/ou métallique et/ou polymère.

17. Article chauffant (1) selon l'une quelconque des revendications 1 à 16, **caractérisé en ce que** le revêtement antiadhésif (4) comprend :
- au moins une couche de primaire d'accrochage (8, 8') comportant de la résine fluorocarbonée et, le cas échéant, de la résine d'accrochage, des charges minérales ou organiques et/ou des pigments, et
- au moins une couche de finition à base de résine fluorocarbonée frittée (5, 5'), recouvrant ladite couche de primaire d'accrochage (8, 8') et comportant en outre un mélange de particules magnétisables et de particules non magnétisables.

18. Article chauffant (1) selon l'une quelconque des revendications 1 à 17, **caractérisé en ce que** le revêtement antiadhésif (4) comprend au moins un motif qui comporte une composition pigmentaire thermochrome avec au moins un pigment SC thermochrome.

19. Procédé de fabrication d'un article chauffant (1) comprenant un support (2) destiné à être chauffé, ledit procédé comprenant les étapes de :
- préparation d'au moins une composition à base d'au moins une résine fluorocarbonée sous forme particulaire, ladite résine fluorocarbonée étant seule ou en mélange avec une résine d'accrochage thermostable et résistant à au moins 200°C ;
- application de ladite composition sur une surface (3) dudit support (2) pour former une couche de résine fluorocarbonée de finition ;
- cuisson dudit article chauffant (1) ainsi revêtu de ladite couche de de finition comprenant un décor tridimensionnel à une température comprise entre 350°C et 450°C pour fritter ladite couche, de sorte à obtenir une couche frittée (5, 5') à base de résine fluorocarbonée formant un réseau continu ;
ledit procédé étant **caractérisé en ce que** ladite composition à base de résine fluorocarbonée comporte en outre un mélange de particules magnétisables et de particules non magnétisables, et un champ magnétique étant appliqué dans la couche de résine fluorocarbonée, avant l'étape de cuisson, de façon à orienter une partie des particules magnétiques pour former un décor tridimensionnel dans ladite couche.

20. Procédé selon la revendication 19, **caractérisé en ce que** l'application du champ magnétique est réalisée après l'application de la composition à base de résine fluorocarbonée et avant l'étape de cuisson.

21. Procédé selon la revendication 19 ou 20, **caractérisé en ce que** la composition à base de résine fluorocarbonée comprend des particules de résine fluorocarbonnée ayant une dimension inférieure ou égale à 5 µm.

22. Procédé selon la revendication 21, **caractérisé en ce que** les particules de résine fluorocarbonnée ont une dimension comprise entre 90 nm et 300 nm.

## Patentansprüche

1. Heizartikel (1), umfassend einen Träger (2), der ausgelegt ist, um erhitzt zu werden, wobei der Träger (2) eine Oberfläche (3) umfasst, die mit einer Antihaftbeschichtung (4) bedeckt ist, wobei die Antihaftbeschichtung (4) mindestens eine Sinterschicht (5, 5') auf der Grundlage von Fluorkohlenstoffharz umfasst, die ein kontinuierliches Netz bildet,
**dadurch gekennzeichnet, dass** die Sinterschicht (5, 5') eine Deckschicht ist, die außerdem eine Mischung aus magnetisierbaren Partikeln (50) und nicht magnetisierbaren Partikeln (51) umfasst, wobei ein Teil der magnetisierbaren Partikel um einen Winkel α mit Bezug auf die Fläche des Trägers (2) geneigt ist, und wobei die anderen magnetisierbaren Partikel im Wesentlichen derart parallel zum Träger (2) sind, so dass sie ein dreidimensionales Dekor bilden.

2. Heizartikel (1) nach Anspruch 1, **dadurch gekennzeichnet, dass** der Neigungswinkel α eines Teils der magnetisierbaren Partikel (50) zwischen 20° und 89° und vorzugsweise zwischen 45° und 89° liegt.

3. Heizartikel (1) nach Anspruch 1 oder 2, **dadurch gekennzeichnet, dass** die Mischung aus magnetisierbaren Partikeln (50) und nicht magnetisierbaren Partikeln (51) zwischen 1 Gew.% und 5 Gew.% und vorzugsweise zwischen 2 Gew.% und 3 Gew.% des Gewichts der Sinterschicht (5, 5') auf der Grundlage von Fluorkohlenstoffharz darstellt.

4. Heizartikel (1) nach einem der Ansprüche 1 bis 3, **dadurch gekennzeichnet, dass** der Prozentsatz von nicht magnetisierbaren Partikeln (51) in der Mischung aus magnetisierbaren Partikeln und nicht magnetisierbaren Partikeln zwischen 15 Gew.% und 40 Gew.% mit Bezug auf das Gesamtgewicht in der Mischung aus magnetisierbaren Partikeln und nicht magnetisierbaren Partikeln liegt.

5. Heizartikel (1) nach einem der Ansprüche 1 bis 4, **dadurch gekennzeichnet, dass** die magnetisierbaren Partikel (50) eine Dimension D50 von weniger als oder gleich 23 µm aufweisen.

6. Heizartikel (1) nach einem der Ansprüche 1 bis 5, **dadurch gekennzeichnet, dass** die nicht magnetisierbaren Partikel (51) eine Dimension D90 aufweisen, die zwischen 20 % und 250 % der Dimension der magnetisierbaren Partikel liegt.

7. Heizartikel (1) nach einem der Ansprüche 1 bis 6, **dadurch gekennzeichnet, dass** die magnetisierbaren Partikel und die nicht magnetisierbaren Partikel die Form von Flocken (6) aufweisen.

8. Heizartikel (1) nach einem der Ansprüche 1 bis 7, **dadurch gekennzeichnet, dass** die magnetisierbaren Partikel und/oder die nicht magnetisierbaren Partikel auf der Oberfläche gefärbt sind.

9. Heizartikel (1) nach Anspruch 8, **dadurch gekennzeichnet, dass** die magnetisierbaren Partikel und/oder die nicht magnetisierbaren Partikel eine Kern-Hülle-Struktur aufweisen.

10. Heizartikel (1) nach einem der Ansprüche 1 bis 9, **dadurch gekennzeichnet, dass** die nicht magnetisierbaren Partikel aus Glimmer, Aluminium oder Glimmer, beschichtet mit Titandioxid, bestehen.

11. Heizartikel (1) nach einem der Ansprüche 1 bis 10, **dadurch gekennzeichnet, dass** die magnetisierbaren Partikel aus Eisen, Eisenoxid, Aluminium, beschichtetet mit Eisen, oder Glimmer, beschichtet mit Eisen, bestehen, wobei das Eisen eine Ferritform aufweist.

12. Heizartikel (1) nach einem der Ansprüche 1 bis 11, **dadurch gekennzeichnet, dass** die Sinterschicht (5, 5') ein einziges Fluorkohlenstoffharz oder eine Mischung aus Fluorkohlenstoffharzen, allein oder in Mischung mit anderen wärmestabilen Harzen, aufweist.

13. Heizartikel (1) nach Anspruch 12, **dadurch gekennzeichnet, dass** das Fluorkohlenstoffharz ausgewählt ist aus Polytetrafluorethylen (PTFE), Tetrafluorethylen- und Perfluorpropylvinylether (PFA)-Copolymer und Tetrafluorethylen- und Hexafluorpropylen (FEP)-Copolymer und ihren Mischungen.

14. Heizartikel (1) nach einem der Ansprüche 1 bis 13, **dadurch gekennzeichnet, dass** er eine Schicht aus hartem, kontinuierlichem oder diskontinuierlichem Grund umfasst, die die Oberfläche (3) des Trägers (2) bedeckt, wobei die Schicht aus hartem Grund mit der Antihaftbeschichtung (4) bedeckt ist.

15. Heizartikel (1) nach Anspruch 14, **dadurch gekennzeichnet, dass** der harte Grund eine Schicht aus rauem Email ist, die die folgenden Eigenschaften aufweist:
- eine größere Härte als diejenige des Metalls oder der Metalllegierung, aus denen der Trägers (2) besteht,
- einen Schmelzpunkt, der zwischen demjenigen des Metalls oder der Metalllegierung, aus denen der Träger (2) besteht, und demjenigen des (oder der) Sinterharzes/Sinterharze der Antihaftbeschichtung (4) liegt, und
- eine Oberflächenrauhigkeit Ra, die zwischen 2 µm und 20 µm liegt.

16. Heizartikel (1) nach Anspruch 14, **dadurch gekennzeichnet, dass** der harte Grund aus einem Keramik- und/oder Metall- und/oder Polymermaterial ist.

17. Heizartikel (1) nach einem der Ansprüche 1 bis 16, **dadurch gekennzeichnet, dass** die Antihaftbeschichtung (4) Folgendes umfasst:
- mindestens eine Schicht Haftgrundierung (8, 8'), umfassend Fluorkohlenstoffharz und gegebenenfalls Haftharz, mineralische oder organische Füllstoffe und/oder Pigmente und
- mindestens eine Deckschicht auf der Grundlage von gesintertem Fluorkohlenstoffharz (5, 5'), die die Schicht aus Haftgrundierung (8, 8') abdeckt und außerdem eine Mischung aus magnetisierbaren Partikeln und nicht magnetisierbaren Partikeln umfasst.

18. Heizartikel (1) nach einem der Ansprüche 1 bis 17, **dadurch gekennzeichnet, dass** die Antihaftbeschichtung (4) mindestens ein Muster umfasst, das eine thermochrome Pigmentzusammensetzung mit mindestens einem thermochromen SC-Pigment aufweist.

19. Verfahren zur Herstellung eines Heizartikels (1), umfassend einen Träger (2), der ausgelegt ist, um erhitzt zu werden, wobei das Verfahren die folgenden Schritte umfasst:
- Vorbereiten von mindestens einer Zusammensetzung auf der Grundlage von mindestens einem Fluorkohlenstoffharz in Partikelform, wobei das Fluorkohlenstoffharz allein oder in Mischung mit einem wärmestabilen und bis mindestens 200 °C beständigem Haftharz ist;
- Auftragen der Zusammensetzung auf eine Oberfläche (3) des Trägers (2), um eine Deckschicht aus Fluorkohlenstoffharz zu bilden;
- Brennen des so mit der Deckschicht beschichteten Heizartikels (1), umfassend ein dreidimensionales Dekor, bei einer Temperatur, die zwischen 350 °C und 450 °C liegt, um die Schicht zu sintern, um so eine gesinterte Schicht (5, 5') auf der Grundlage von Fluorkohlenstoffharz zu erhalten, die ein kontinuierliches Netz bildet;
wobei das Verfahren **dadurch gekennzeichnet ist, dass** die Zusammensetzung auf der Grundlage von Fluorkohlenstoffharz außerdem eine Mischung aus magnetisierbaren Partikeln und nicht magnetisierbaren Partikeln und ein Magnetfeld umfasst, das in der Schicht aus Fluorkohlenstoffharz vor dem Schritt des Brennens aufgetragen wird, um einen Teil der magnetischen Partikel auszurichten, um ein dreidimensionales Dekor in der Schicht zu bilden.

20. Verfahren nach Anspruch 19, **dadurch gekennzeichnet, dass** das Aufbringen des Magnetfelds nach dem Aufbringen der Zusammensetzung auf der Grundlage von Fluorkohlenstoffharz und vor dem Schritt des Brennens durchgeführt wird.

21. Verfahren nach Anspruch 19 oder 20, **dadurch gekennzeichnet, dass** die Zusammensetzung auf der Grundlage von Fluorkohlenstoffharz Partikel aus Fluorkohlenstoffharz umfasst, die eine Dimension von weniger als oder gleich 5 µm aufweisen.

22. Verfahren nach Anspruch 21, **dadurch gekennzeichnet, dass** die Partikel aus Fluorkohlenstoffharz eine Dimension aufweisen, die zwischen 90 nm und 300 nm liegt.

## Claims

1. Heating article (1) comprising a supporting member (2) intended to be heated, said supporting member (2) comprising a surface (3) coated with a non-stick coating (4) comprising at least one sintered layer (5, 5') based on fluorocarbon resin forming a continuous lattice,
**characterised in that** said sintered layer (5, 5') is a finishing layer further comprising a mixture of magnetisable particles (50) and non-magnetisable particles (51), a portion of said magnetisable particles being inclined by an angle α with respect to the surface of the supporting member (2) and the other magnetisable particles being substantially parallel with the supporting member (2) so as to form a three-dimensional decor.

2. Heating article (1) according to claim 1, **characterised in that** the angle of inclination α of a portion of the magnetisable particles (50) is between 20° and 89°, and preferably between 45° and 89°.

3. Heating article (1) according to claim 1 or 2, **characterised in that** the mixture of magnetisable particles (50) and non-magnetisable particles (51) represents between 1% and 5%, and preferably between 2% and 3%, by weight of the weight of the sintered layer (5, 5') based on fluorocarbon resin.

4. Heating article (1) according to any of claims 1 to 3, **characterised in that** the percentage of non-magnetisable particles (51) in the mixture of magnetisable particles and non-magnetisable particles is between 15% and 40% by weight with respect to the total weight of the mixture of magnetisable particles and non-magnetisable particles.

5. Heating article (1) according to any of claims 1 to 4, **characterised in that** the magnetisable particles (50) have a size D50 less than or equal to 23 µm.

6. Heating article (1) according to any of claims 1 to 5, **characterised in that** the non-magnetisable particles (51) have a size D90 between 20% and 250% of the size of the magnetisable particles.

7. Heating article (1) according to any of claims 1 to 6, **characterised in that** the magnetisable particles and non-magnetisable particles are presented in the form of flakes (6).

8. Heating article (1) according to any of claims 1 to 7, **characterised in that** the magnetisable particles and/or non-magnetisable particles are surface-dyed.

9. Heating article (1) according to claim 8, **characterised in that** the magnetisable particles and/or non-magnetisable particles have a core-envelope structure.

10. Heating article (1) according to any of claims 1 to 9, **characterised in that** the non-magnetisable particles consist of mica, aluminium, or mica coated with titanium dioxide.

11. Heating article (1) according to any of claims 1 to 10, **characterised in that** the magnetisable particles consist of iron, iron oxide, aluminium coated with iron, or mica coated with iron, the iron being presented in ferritic form.

12. Heating article (1) according to any of claims 1 to 11, **characterised in that** the sintered layer (5, 5') comprises a single fluorocarbon resin or a mixture of fluorocarbon resins, alone or in a mixture with other heat-stable resins.

13. Heating article (1) according to claim 12, **characterised in that** the fluorocarbon resin is chosen from polytetrafluoroethylene (PTFE), tetrafluoroethylene and perfluoropropylvinylether copolymer (PFA), and tetrafluoroethylene and hexafluoropropylene copolymer (FEP), and mixtures thereof.

14. Heating article (1) according to any of claims 1 to 13, **characterised in that** it comprises a continuous or discontinuous hard base layer, covering said surface (3) of the supporting member (2), said hard base layer being covered with said non-stick coating (4).

15. Heating article (1) according to claim 14, **characterised in that** the hard base is a rough enamel layer having the following characteristics:
- a hardness greater than that of the constituent metal or metal alloy of the supporting member (2),
- a melting point between that of the constituent metal or metal alloy of the supporting member (2) and that of the sintered resin (s) of the non-stick coating (4), and
- a surface roughness Ra between 2 µm and 20 µm.

16. Heating article (1) according to claim 14, **characterised in that** the hard base is made of a ceramic and/or metallic and/or polymer material.

17. Heating article (1) according to any of claims 1 to 16, **characterised in that** the non-stick coating (4) comprises:
- at least one layer of bonding primer (8, 8') comprising fluorocarbon resin and, if applicable, bonding resin, mineral or organic fillers and/or pigments, and
- at least one finishing layer based on sintered fluorocarbon resin (5, 5'), covering said bonding primer layer (8, 8') and further comprising a mixture of magnetisable particles and non-magnetisable particles.

18. Heating article (1) according to any of claims 1 to 17, **characterised in that** the non-stick coating (4) comprises at least one pattern comprising a thermochromic pigment composition with at least one thermochromic SC pigment.

19. Method for manufacturing a heating article (1) comprising a supporting member (2) intended to be heated, said method comprising steps for:
- preparing at least one composition based on at least one fluorocarbon resin in particulate form, said fluorocarbon resin being alone or in a mixture with a heat-stable bonding resin and resistant to at least 200°C;
- applying said composition on a surface (3) of said supporting member (2) to form a finishing layer of fluorocarbon resin;
- firing said heating article (1) coated in this way with said finishing layer comprising a three-dimensional decor at a temperature between 350°C and 450°C to sinter said layer, so as to obtain a sintered layer (5, 5') based on fluorocarbon resin forming a continuous lattice;
said method being **characterised in that** said composition based on fluorocarbon resin further comprises a mixture of magnetisable particles and non-magnetisable particles, and a magnetic field being applied in the layer of fluorocarbon resin, before the firing step, so as to orient a portion of the magnetic particles to form a three-dimensional decor in said layer.

20. Method according to claim 19, **characterised in that** the magnetic field is applied after applying the composition based on fluorocarbon resin and before the firing step.

21. Method according to claim 19 or 20, **characterised in that** the composition based on fluorocarbon resin comprises particles of fluorocarbon resin having a size less than or equal to 5 µm.

22. Method according to claim 21, **characterised in that** the particles of fluorocarbon resin have a size between 90 nm and 300 nm.
